# FASCICULE DE BREVET EUROPEEN

(11) **EP 2 001 935 B1**
(45) Date de publication et mention de la délivrance du brevet: **17.08.2016**
(21) Numéro de dépôt: 07727591.5
(22) Date de dépôt: 30.03.2007
(51) Int. Cl.: C08G 83/00, C08G 69/02, C08G 69/26, C08G 69/36, C08L 77/06

(54) **POLYAMIDE DE HAUTE FLUIDITÉ**
POLYAMID MIT HOHER FLIESSFÄHIGKEIT
HIGH-FLUIDITY POLYAMIDE

(30) Priorité: 31.03.2006 FR 0602784; 01.12.2006 FR 0610513
(43) Date de publication de la demande: 17.12.2008
(73) Titulaire: Rhodia Opérations, 93306 Aubervilliers (FR)
(72) Inventeur: GUAITA, Cesare, I-21049 Tradate (IT); PEDUTO, Nicolangelo, I-20131 Milano (IT); DI SILVESTRO, Giuseppe, I-20300 Lentate Sul Seveso (IT)
(74) Mandataire: Benvenuti, Federica
(86) Numéro de dépôt international: PCT/EP2007/053119
(87) Numéro de publication internationale: WO 2007/113262

(56) Documents cités:
- EP-A- 0 774 480
- EP-A2- 0 345 648
- FR-A1- 2 766 197
- FR-A1- 2 810 326

## Description

La présente invention concerne un polyamide et un procédé de fabrication de celui-ci et des compositions le contenant. Elle concerne plus particulièrement un polyamide obtenu par polymérisation de monomères diacides et diamines en présence de composés multifonctionnels et monofonctionnels capables de former une fonction amide par réaction soit avec une fonction amine soit une fonction acide. Ce polyamide est notamment utile pour la fabrication de compositions destinées, par exemple, à être moulées.

Les compositions thermoplastiques à base de polyamide sont des matières premières susceptibles d'être transformées par moulage, notamment par moulage par injection pour fabriquer des pièces plastiques.

Il existe au moins trois propriétés majeures que l'on souhaite obtenir pour ces compositions à base de polyamide, notamment lorsqu'on les utilise dans ces procédés de transformation.

La première de ces propriétés réside dans le fait que ces compositions thermoplastiques mises en oeuvre doivent être caractérisées, à l'état fondu, par une fluidité ou un comportement rhéologique compatible avec les procédés de mise en forme d'intérêts, tel que le moulage par injection. En effet, ces compositions thermoplastiques doivent être suffisamment fluides lorsqu'elles sont en fusion, pour pouvoir être acheminées et manipulées aisément et rapidement dans certains dispositifs de mise en forme, tels que par exemple le moulage par injection.

On cherche également à augmenter les propriétés mécaniques de ces compositions. Ces propriétés mécaniques sont notamment la résistance aux chocs, le module en flexion ou en traction, la contrainte à la rupture en flexion ou en traction, entre autres. On utilise généralement à cet effet des charges de renfort, telles que des fibres de verre.

Enfin, dans le cas des pièces moulées à partir de ces compositions thermoplastiques, on recherche un aspect de surface net et uniforme. Cette contrainte devient un problème difficile à résoudre particulièrement lorsqu'on utilise une composition thermoplastique fortement chargée en fibres de verre, ces fibres de verre altérant négativement l'aspect de surface des pièces moulées. Pour obtenir un aspect de surface acceptable, il est connu d'utiliser des compositions thermoplastiques présentant une haute fluidité. Toutefois, il résulte de cette augmentation de fluidité une diminution des propriétés mécaniques des articles obtenus.

Il en résulte ainsi qu'il est difficile d'obtenir pour une même composition thermoplastique à base de polyamide ces différentes propriétés.

La demanderesse a mis au point un polyamide modifié par des composés multifonctionnels et monofonctionnels présentant une fluidité augmentée et des propriétés mécaniques équivalentes ou supérieures, par rapport aux polyamides classiques linéaires, et permettant la réalisation d'articles ayant un excellent aspect de surface, notamment lorsque ceux-ci comprennent un fort taux de charges.

Un tel polyamide est obtenu par polymérisation de monomères diacides carboxyliques et diamines, d'un composé multifonctionnel présentant au moins 3 fonctions acides ou amines susceptibles de former une liaison amide avec les fonctions desdits monomères diacides carboxyliques et diamines, et d'un composé monofonctionnel présentant une fonction acide ou amine, de même nature que les fonctions dudit composé multifonctionnel, susceptibles de former une fonction amide avec les fonctions desdits monomères diacides carboxyliques et diamines. Le procédé de polymérisation est classique et correspond à celui habituellement utilisé pour la polymérisation de polyamide à base de monomères diacides et diamines, tel que le polyamide 66.

La présente invention a pour premier objet un polyamide susceptible d'être obtenu par polymérisation en présence d'au moins :
(i) des monomères diacides carboxyliques et diamines, ou leurs sels ;
(ii) de 0,05 à 0,5 % en moles d'un composé multifonctionnel comprenant au moins 3 fonctions X1, par rapport au nombre de moles de monomères constitutifs du polyamide ;
(iii) de 0,2 à 2 % en moles d'un composé monofonctionnel comprenant une fonction X2, par rapport au nombre de moles de monomères constitutifs du polyamide ;
les fonctions X1 et X2 étant des fonctions acides carboxyliques ou des fonctions amines, susceptibles de réagir avec les monomères diacides carboxyliques et diamines (i) et de former une liaison amide ;
- lorsque le composé multifonctionnel (ii) comprend des fonctions X1 de type acide carboxylique, le composé monofonctionnel (iii) comprend une fonction X2 de type acide carboxylique ; et
- lorsque le composé multifonctionnel (ii) comprend des fonctions X1 de type amine, le composé monofonctionnel (iii) comprend une fonction X2 de type amine.

Par nombre de moles de monomères constitutifs du polyamide, on entend le nombre de moles de diacides carboxyliques ajouté au nombre de moles de diamines, ceux-ci pouvant éventuellement être combinés sous forme de sels, auquel s'ajoute éventuellement le nombre de moles d'aminoacides ou lactames.

Les composés multifonctionnels (ii) et monofonctionnels (iii) portent ainsi des fonctions X1 et X2 de même nature ; de type acide carboxylique ou de type amine. Préférentiellement, les fonctions X1 des composés multifonctionnels (ii) et la fonction X2 des composés monofonctionnels (iii) sont identiques.

Préférentiellement, le polyamide selon l'invention est obtenu par polymérisation des monomères diacides carboxyliques et diamines, ou leurs sels, un seul type de composé multifonctionnel (ii) et un seul type de composé monofonctionnel (iii).

Les monomères diacides carboxyliques et diamines sont notamment ceux classiquement utilisés pour la fabrication :
- des polyamides aliphatiques, de type PA 6.6, PA 6.10, PA 6.12, PA 12.12, PA 4.6,
- des polyamides semi-aromatiques, comme le polyadipate de m-xylylènediamine (MXD6), les polytéréphtalamides, tel que les polyamides 6.T et 6.6.6T, les polyisophtalamides, tel que les polyamides 6.I et 6.6.6I,
- les polyaramides,
- ou leurs copolymères.

Ces monomères diacides carboxyliques et/ou diamines peuvent être aliphatique, notamment à chaîne linéaire, ramifiée ou cyclique, ou aromatiques.

Comme monomère diacide carboxylique, on peut notamment citer les diacides carboxyliques aliphatiques ou aromatiques ayant de 4 à 12 atomes de carbone, tels que l'acide adipique, l'acide téréphtalique, l'acide isophtalique, l'acide oxalique, l'acide malonique, l'acide succinique, l'acide glutarique, l'acide pymélique, l'acide décanedioïque, l'acide dodécanedioïque.

Comme monomère diamine, on peut notamment citer les diamines aliphatiques, éventuellement cycloaliphatiques, ou aromatiques ayant de 4 à 12 atomes de carbone, tel que l'hexaméthylènediamine, la butane diamine, la m-xylylène diamine, l'isophoronediamine, la 3,3',5-triméthyl hexaméthylènediamine, et la méthylpentaméthylènediamine.

On préfère notamment utiliser selon la présente invention les monomères constitutifs du polyamide 66, qui sont l'acide adipique, l'hexaméthylènediamine, ou leurs sels, tel que l'adipate d'hexaméthylènediammonium également appelé sel Nylon ou sel N.

Dans le procédé selon l'invention, il est parfaitement possible d'utiliser une quantité équimolaire de diacide carboxylique et de diamine, ou alors un excès de l'un de ces composés pour obtenir un déséquilibre en groupement terminaux acides ou amines, comme il est bien connu de l'homme de l'art.

Le polyamide modifié selon l'invention peut comprendre un ou plusieurs diacides carboxyliques et une ou plusieurs diamines, de types différents. Ainsi, on peut ajouter par exemple en polymérisation une quantité équimolaire de diacide carboxylique et de diamine, et une certaine proportion d'un autre diacide carboxylique d'un autre type.

On peut également ajouter aux monomères diacides carboxyliques et diamines, des aminoacides ou leurs lactames, tel que le caprolactame par exemple. On peut notamment ajouter au milieu réactionnel de 1 à 15 % en moles d'aminoacides ou lactames par rapport au nombre de moles de monomères constitutifs du polyamide, préférentiellement de 2 à 10 % en moles.

Le composé multifonctionnel (ii) selon l'invention comprend au moins 3, préférentiellement entre 3 et 10, plus préférentiellement 3 ou 4, fonctions X1 ; X 1 étant une fonction acide carboxylique ou une fonction amine, susceptible de réagir avec les monomères constitutifs du polyamide et de former une liaison amide.

La fonction X1 est préférentiellement une fonction acide carboxylique ou une fonction amine primaire ou secondaire, ou leurs sels.

Des exemples de composés multifonctionnels pouvant convenir sont notamment cités dans les US5346984, US5959069, WO9635739 et EP672703.

On préfère notamment un composé multifonctionnel (ii) de formule générale (1) :

R-[A-X1]n (1)

dans laquelle :
- R est un radical hydrocarboné comprenant au moins 2 atomes de carbone aliphatique (linéaire ou ramifié), cycloaliphatique ou aromatique et pouvant comprendre un ou plusieurs hétéroatomes ;
- A est une liaison covalente ou un radical hydrocarboné aliphatique pouvant comprendre un ou plusieurs hétéroatomes, et comprenant de 1 à 20 atomes de carbone, de préférence de 1 à 6 atomes de carbone ;
- X1 est une fonction acide carboxylique ou une fonction amine primaire ou secondaire, ou leurs sels ; et
- n est un nombre entier compris entre 3 et 10, préférentiellement égal à 3 ou 4.

Ce composé multifonctionnel (ii) est préférentiellement un composé hydrocarboné comprenant au moins 4 atomes de carbone, particulièrement au moins 5 atomes de carbone, notamment de 10 à 100 atomes de carbone, aliphatique (linéaire ou ramifié), cycloaliphatique ou aromatique et pouvant comprendre un ou plusieurs hétéroatomes.

Les hétéroatomes peuvent être O, S, N ou P.

A peut être un radical méthylénique ou polyméthylénique tel que les radicaux éthyle, propyle ou butyle, ou un radical polyoxyalkylènique tel que le radical polyoxyéthylénique.

R peut être une chaîne hydrocarbonée aliphatique comprenant de 2 à 10 atomes de carbones linéaire ou ramifiée, saturée ou insaturée, pouvant comprendre un cyclohexyle, un cyclohexanonyle, un benzyle, un naphtyle, un anthracényle, un biphényle, un triphényle, une pyridine, une bipyridine, un pyrrole, un indole, un furane, un thiophène, un purine, un quinoléïne, un phénanthrène, un porphyrine, une phtalocyanine, un naphtalocyanine, une 1,3,5-triazine, une 1,4-diazine, un 2,3,5,6-tétraéthylpipérazine, une pipérazines, un tétrathiafulvalène.

A titre d'exemple de composés multifonctionnels (ii) portant des fonctions X1 acides carboxyliques, on peut notamment citer la 2,2,6,6-tétra-(β-carboxyéthyl)cyclohexanone, le diaminopropane - N,N,N',N' acide tétraacétique, l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, l'acide trimésique, l'acide 1,2,4,5-benzènetétracarboxylique, et l'acide 2,4,6-triaminocaproïque-1,3,5-triazine (TACT).

A titre d'exemple de composés multifonctionnels (ii) portant des fonctions X1 amines, on peut notamment citer les nitrilotrialkylamines, en particulier la nitrilotriéthylamine, les dialkylènetriamines, en particulier la diéthylènetriamine, la bis-hexaméthylène triamine, les trialkylènetétramines et tétraalkylènepentamines, l'alkylène étant de préférence l'éthylène, la 4-aminoéthyle-1,8,octanediamine, la mélamine, les composés provenant de la réaction du triméthylol propane ou du glycérol avec l'oxyde de propylène et amination des groupes hydroxyles terminaux (Jeffamine T® de la société Huntsman) de formule générale : 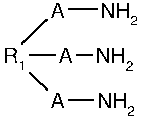 dans laquelle : R₁ représente un radical 1,1,1-triyle propane, ou 1,2,3-triyle propane, et A représente un radical polyoxyéthylénique.

On peut par exemple utiliser la Jeffamine T403® (polyoxypropylènetriamine) de Huntsman comme composé multifonctionnel selon l'invention.

Le composé monofonctionnel (iii) est préférentiellement un composé hydrocarboné comprenant au moins 2 atomes de carbone, aliphatique, cycloaliphatique ou aromatique et pouvant comprendre des hétéroatomes (O, S, N ou P).

Le composé monofonctionnel (iii) est préférentiellement choisi dans le groupe comprenant : la n-hexadécylamine, la n-octadécylamine et la n-dodécylamine l'acide acétique, l'acide laurique, la benzylamine, l'acide benzoïque, l'acide propionique et la 4-amino-2,2,6,6-tétraméthylpipéridine.

La polymérisation du procédé de l'invention est notamment réalisée selon les conditions opératoires classiques de polymérisation des diacides carboxyliques et diamines, quand celle-ci est réalisée en absence des composés multifonctionnels et monofonctionnels.

Un tel procédé de polymérisation peut comprendre brièvement :
- un chauffage sous agitation et sous pression du mélange des monomères et composés multifonctionnels (ii) et monofonctionnels (i),
- un maintien du mélange sous pression et température pendant une durée déterminée, puis décompression et maintien pendant une durée déterminée à une température supérieure au point de fusion du mélange, notamment sous azote ou sous vide, pour ainsi continuer la polymérisation par élimination de l'eau formée.

Les composés multifonctionnels (ii) et monofonctionnels (i) sont préférentiellement ajoutés au début de la polymérisation. Dans ce cas on procède à la polymérisation d'un mélange des monomères diacides carboxyliques et diamines et des composés multifonctionnels (ii) et monofonctionnels (i).

En sortie de polymérisation, le polymère peut être refroidi avantageusement par de l'eau, et extrudé, puis coupés pour produire des granulés.

Le procédé de polymérisation selon l'invention peut parfaitement être réalisé en continu ou en discontinu.

Dans le procédé de polymérisation de l'invention, on utilise de 0,05-0,5 % en moles, préférentiellement de 0,2 à 0,5 % en moles, plus préférentiellement de 0,25 à 0,4 % en moles de composés multifonctionnels (ii), par rapport à la somme du nombre de moles de monomères constitutifs du polyamide, notamment 0,25, 0,5, 0,1, 0,15, 0,2, 0,25, 0,3, 0,35 et 0,4 % en moles.

Dans le procédé de polymérisation de l'invention, on utilise de 0,2 à 2 % en moles, préférentiellement 0,5-2 % en moles, plus préférentiellement de 0,5 à 1 % en moles de composés monofonctionnels (iii), par rapport à la somme du nombre de moles de monomères constitutifs du polyamide, notamment 0,4, 0,5 0,6, 0,7, 0,8 et 0,9 % en moles.

On utilise préférentiellement une proportion de composés multifonctionnels (ii) et monofonctionnels (iii) obéissant à la relation suivante :

(nCmu . FX1) / nCmo compris entre 0,1 et 4,

avec :
nCmu est le nombre de moles de composés multifonctionnel (ii),
nCmo est le nombre de moles de composés monofonctionnel (iii), et
FX1 est le nombre de fonctions X1 du composé multifonctionnel (ii).

Selon l'invention, le polyamide modifié présente préférentiellement un indice de viscosité en solution compris entre 80 et 120, selon la norme ISO 307 (avec 0,5 % de polymère en solution dans de l'acide formique à 90 %, à une température de 25°C), notamment entre 85 et 110.

La présente invention a également pour objet une composition comprenant au moins le polyamide tel que défini précédemment.

Préférentiellement, le polyamide de l'invention est utilisé en tant que matrice dans cette composition, notamment pour l'obtention d'articles moulés.

Pour améliorer les propriétés mécaniques de cette composition, il peut être avantageux de lui adjoindre au moins une charge de renfort et/ou de remplissage préférentiellement choisie dans le groupe comprenant les charges fibreuses telles que les fibres de verre, les charges minérales telles que les argiles, le kaolin, ou des nanoparticules renforçantes ou en matière thermo-durcissable, et les charges en poudre telles que le talc. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 30 et 60 %.

La composition peut comprendre, outre le polyamide modifié de l'invention, un ou plusieurs autres polymères, de préférence polyamides ou copolyamides.

La composition selon l'invention peut en outre comprendre des additifs usuellement utilisés pour la fabrication de compositions polyamides destinées à être moulées. Ainsi, on peut citer les lubrifiants, les agents ignifugeants, les plastifiants, les agents nucléants, les catalyseurs, les agent d'amélioration de la résilience comme des élastomères éventuellement greffés, les stabilisants lumière et/ou thermique, les antioxydants, les antistatiques les colorants, les matifiants, les additifs d'aide au moulage ou autres additifs conventionnels.

Ces charges et additifs peuvent être ajoutés au polyamide modifié par des moyens usuels adaptés à chaque charges ou additifs, tel que par exemple lors de la polymérisation ou en mélange en fondu.

Le polyamide selon l'invention peut également aussi être utilisé comme matrice dans une composition comprenant une forte proportions d'additifs de type mélange maître (masterbatch) destinée à être mélangée à une autre composition thermoplastique.

Le polyamide selon l'invention peut également être utilisé, en tant qu'additif, ou en mélange, notamment pour conférer certaines propriétés, notamment rhéologiques, dans des compositions comprenant en tant que matrice un polymère thermoplastique, notamment un (co)polyamide. On mélange alors généralement le polyamide selon l'invention en fondu avec des polymères thermoplastiques. On peut notamment utiliser une proportion comprise entre 10 et 90 % en poids de (co)polyamide, tel qu'un (co)polyamide linéaire, préférentiellement de 30 à 80 % en poids, par rapport à la proportion totale de (co)polyamide et du polyamide selon l'invention.

Les compositions selon l'invention peuvent être utilisées comme matière première dans le domaine des plastiques techniques, par exemple pour la réalisation d'articles obtenus par moulage par injection, par injection/soufflage, par extrusion ou par extrusion soufflage.

Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

### Exemple 1 : Fabrication des polyamides

La polymérisation est réalisée dans un autoclave chauffé et comprenant des moyens d'agitation.

11,111 kg de sel N (quantité équimolaire d'acide adipique et d'héxaméthylènediamine), 81 g de 2,2,6,6-tétra-(β-carboxyéthyl)cyclohexanone (0,25% molaire), 80 g d'acide benzoïque (0,78% molaire), 40 g d'antimousse (Silcolapse) sont ajoutés dans l'autoclave avec 5 litres d'eau distillée, à une température de 90 °C.

Le mélange, mis sous agitation, est chauffé à une température de 280°C sous 7,5 atmosphères. Il est maintenu à cette température et pression pendant 2 heures.

La pression est ensuite diminuée, puis un balayage de l'autoclave par l'azote est réalisé pendant une heure et demie, tout en maintenant la température à 280°C. Le système est ensuite mis sous vide, à une pression de 0,5 atmosphères, pendant une heure.

Le polymère fondu est ensuite extrudé sous forme de joncs puis refroidi rapidement à l'eau et découpé en granulés.

Différents polymères sont synthétisés de cette manière en variant la proportion des composés multifonctionnels et monofonctionnels.

L'exemple C1 correspond à un polyamide 66 linéaire fabriqué en absence de composé multifonctionnel et monofonctionnel.

### Exemple 2 : Propriétés des polyamides

Les caractéristiques, propriétés rhéologiques et mécaniques de ces polymères sont rassemblées dans le tableau 1 ci-dessous. Pour la mesure de certaines des propriétés, des éprouvettes réalisées par moulage par injection sont fabriquées.

**Tableau 1**

| | **C1** | **1** | **2** | **3** | **4** |
|---|---|---|---|---|---|
| Teneur en composé multifonctionnel (% molaire) | 0 | 0,25 | 0,3 | 0,25 | 0,4 |
| Teneur en composé monofonctionnel (% molaire) | 0 | 0,78 | 0,8 | 0,6 | 0,8 |
| NH2 (meq/Kg) | 50 | 13 | 14 | 15 | 14 |
| COOH (meq/Kg) | 70 | 190 | 205 | 180 | 222 |
| IV (1) | 142 | 92 | 87 | 102 | 100 |
| Indice de fluidité en milieu fondu (2) (g/10min) | 8 | 43,2 | 42,5 | 32 | 39 |
| Choc Izod entaillé (KJ/m²) | 5,7 | 3,7 | 3,5 | 3,9 | 3,6 |
| Choc Izod non-entaillé (KJ/m²) | - | 72 | 60 | 63 | 78 |
| Résistance à la traction (N/mm²) | 55 | 75 | 67 | 75 | 70 |
| Allongement (%) | 30 | 2,7 | 2,7 | 3,2 | 2,7 |
| Module de tension (N/mm²) | 3100 | 3410 | 3110 | 3080 | 3010 |

| | | | | | |
|---|---|---|---|---|---|
| (1) Indice de viscosité mesuré à partir d'une solution à 0,5% de polymère dissous dans de l'acide formique à 90%, selon la norme ISO307 (2) Indice de fluidité (MFI) déterminé selon la norme ASTM D1238, mesuré en g/10 min. à 275°C sous une charge de 325 g | | | | | |

Les teneurs en groupements terminaux acides et amines sont dosées par potentiométrie, les chocs Izod sont mesurés selon les normes ISO 179/1eU et ISO 179/1eA, la résistance à la traction, l'allongement et le module de tension sont mesurés selon la norme ISO 527 à une température de 23 °C.

### Exemple 3 : Compositions chargées

Des compositions comprenant comme matrice polyamide, les polyamides fabriqués précédemment, sont chargées avec 50 % en poids de fibres de verre par mélange à l'état fondu en extrudeuse bi-vis type Werner et Pfleiderer ZSK 40 avec dégazage (L/D=36). Les fibres de verre sont des Vetrotex 99B. Les paramètres d'extrusion sont les suivants : température d'extrusion avec un profil croissant 235-280 °C ; vitesse de rotation de la vis : 260 tours par minute ; débit de la composition 40 Kg/h ; le couple moteur et la puissance moteur absorbée varient selon les polyamides.

Les propriétés des compositions chargées sont rassemblées dans le tableau 2 ci-dessous. Pour la mesure de certaines des propriétés, des éprouvettes réalisées par moulage par injection sont fabriquées.

**Tableau 2**

| | **C1** | **1** | **2** | **3** | **4** |
|---|---|---|---|---|---|
| Indice de fluidité en milieu fondu (3) (g/10min) | 2,8 | 16,5 | 18 | 11 | 13 |
| Choc Izod entaillé (KJ/m²) | 17,8 | 18,4 | 18,8 | 17 | 18 |
| Choc Izod non-entaillé (KJ/m²) | 92 | 86 | 90 | 81 | 82 |
| Force de tension (N/mm²) | 224 | 244 | 251 | 233 | 247 |
| Allongement (%) | 2,7 | 2,3 | 2,5 | 2,2 | 2,3 |
| Module de tension (N/mm²) | 15300 | 15100 | 16300 | 15400 | 16300 |
| Test Spiral (cm) | 33 | 45 | 48 | 40 | 45 |
| Aspect de surface | mauvais | très bon | très bon | très bon | très bon |
| Couple moteur (N/mm) | 50-55 | 30-35 | 30-35 | 30-35 | 30-35 |
| Puissance moteur absorbée (A) | 26 | 16 | 16 | 17 | 16 |

| | | | | | |
|---|---|---|---|---|---|
| (3) Indice de fluidité (MFI) déterminé selon la norme ASTM D1238, mesuré en g/10 min. à 275°C sous une charge de 2160 g | | | | | |

L'aspect de surface est apprécié visuellement ; le test spiral permet de quantifier la fluidité des compositions en mettant en fusion les granulés et en les injectant dans un moule en forme de spirale à section semi-circulaire d'épaisseur 2 mm et de diamètre 4 cm, dans une presse BM-Biraghi 85T à une température de fourreau de 275°C, une température de moule de 80°C et avec une pression d'injection de 80 bars (le résultat est exprimé en longueur de moule remplie correctement par la composition).

### Exemple 4 : Compositions chargées comprenant un mélange de polyamide linéaire et de polyamide selon l'invention

Des compositions comprenant le polyamide de l'exemple 4 (PA 4) et diverses proportions de polyamide 66 (PA C1) sont fabriquées par mélange à l'état fondu en extrudeuse bi-vis type Werner et Pfleiderer ZSK 40 avec dégazage (L/D=36), en présence de 30 % en poids de fibres de verre. Les paramètres d'extrusion sont les suivants : température d'extrusion avec un profil croissant 250-285°C ; vitesse de rotation de la vis : 260 tours par minute ; débit de la composition 40 Kg/h ; le couple moteur et la puissance moteur absorbée varient selon les polyamides.

Les propriétés des compositions chargées sont rassemblées dans le tableau 3 ci-dessous. Pour la mesure de certaines des propriétés, des éprouvettes réalisées par moulage par injection sont fabriquées.

**Tableau 3**

| | **4** | **5** | **6** | **7** |
|---|---|---|---|---|
| Composition polyamide | 100 % PA 4 | 80 % PA 4 + 20 % PA C1 | 70 % PA 4 + 30 % PA C1 | 50 % PA 4 + 50 % PA C1 |
| Indice de fluidité en milieu fondu (3) (g/10min) | 10 | 11,5 | 10 | 8,1 |
| Choc Charpy entaillé (KJ/m²) | 11 | 10 | 11 | 11 |
| Choc Charpy non-entaillé (KJ/m²) | 45 | 50 | 54 | 67 |

| | | | | |
|---|---|---|---|---|
| (3) Indice de fluidité (MFI) déterminé selon la norme ASTM D1238, mesuré en g/10 min. à 275°C sous une charge de 2160 g | | | | |

Le choc Charpy est mesuré selon la norme ISO 179/1 eA.

On observe que l'ajout de polyamide 66 linéaire au polyamide selon l'invention permet d'augmenter les propriétés mécaniques de la composition résultante, sans affecter négativement sa fluidité en milieu fondu.

### Exemple 5 : Fabrication et propriétés de polyamides modifiés

Des polyamides modifiés selon l'invention sont fabriqués comme décrit dans l'exemple 1 selon les proportions des monomères de l'essai 4, et avec un ajout de 5 ou 10 % en poids de caprolactame (remplaçant ainsi 5 ou 10 % en poids de sel N).

Le polymère fondu est ensuite extrudé sous forme de joncs puis refroidi rapidement à l'eau et découpé en granulés.

Les caractéristiques, propriétés rhéologiques et mécaniques de ces polymères sont rassemblées dans le tableau ci-dessous.

**Tableau 4**

| | **C1** | **4** | **8** | **9** |
|---|---|---|---|---|
| Caprolactame (% en poids) | 0 | 0 | 5 | 10 |
| Indice de fluidité en milieu fondu (2) (g/10min) | 8 | 32 | 31 | 32 |
| Choc Charpy entaillé (KJ/m²) | 4,5 | 3,4 | 4,2 | 4,6 |

| | | | | |
|---|---|---|---|---|
| (2) Indice de fluidité (MFI) déterminé selon la norme ASTM D1238, mesuré en g/10 min. à 275°C sous une charge de 325 g | | | | |

## Revendications

1. Polyamide susceptible d'être obtenu par polymérisation en présence d'au moins:
(i) des monomères diacides carboxyliques et diamines, ou leurs sels ,
(ii) de 0,05 à 0,5 % en moles d'un composé multifonctionnel comprenant au moins 3 fonctions X1, par rapport à la somme du nombre de moles de monomères constitutifs du polyamide ;
(iii) de 0,2 à 2 % en moles d'un composé monofonctionnel comprenant une fonction X2, par rapport à la somme du nombre de moles de monomères constitutifs du polyamide ;
les fonctions X1 et X2 étant des fonctions acides carboxyliques ou des fonctions amines, susceptibles de réagir avec les monomères diacides carboxyliques et diamines (i) et de former une liaison amide ;
- lorsque le composé multifonctionnel (ii) comprend des fonctions X1 de type acide carboxylique, le composé monofonctionnel (iii) comprend une fonction X2 de type acide carboxylique ; et
- lorsque le composé multifonctionnel (ii) comprend des fonctions X1 de type amine, le composé monofonctionnel (iii) comprend une fonction X2 de type amine.

2. Polyamide selon la revendication 1, **caractérisé en ce que** les monomères constitutifs du polyamide de type diacides carboxyliques sont aliphatiques ou aromatiques et comportent de 4 à 12 atomes de carbone.

3. Polyamide selon la revendication 1 ou 2, **caractérisé en ce que** les monomères constitutifs du polyamide de type diamines sont aliphatiques ou aromatiques et comportent de 4 à 12 atomes de carbone.

4. Polyamide selon l'une quelconque des revendications 1 à 3, **caractérisé en ce que** les monomères constitutifs du polyamide sont l'acide adipique et l'hexaméthylènediamine, ou leurs sels.

5. Polyamide selon l'une quelconque des revendications 1 à 4, **caractérisé en ce que** le composé multifonctionnel (ii) est représenté par la formule générale (1) :
R-[A-X1]n (1)
dans laquelle
- R est un radical hydrocarboné comprenant au moins 2 atomes de carbone aliphatique, linéaire ou ramifié, cycloaliphatique ou aromatique et pouvant comprendre un ou plusieurs hétéroatomes ;
- A est une liaison covalente ou un radical hydrocarboné aliphatique pouvant comprendre un ou plusieurs hétéroatomes, et comprenant de 1 à 20 atomes de carbone ;
- X1 est une fonction acide carboxylique ou une fonction amine primaire ou secondaire, ou leurs sels ; et
- n est un nombre entier compris entre 3 et 10.

6. Polyamide selon l'une quelconque des revendications 1 à 5, **caractérisé en ce que** le composé multifonctionnel (ii) est un composé hydrocarboné comprenant au moins 4 atomes de carbone, aliphatique, cycloaliphatique ou aromatique et pouvant comprendre un ou plusieurs hétéroatomes.

7. Polyamide selon l'une quelconque des revendications 1 à 6, **caractérisé en ce que** le composé multifonctionnel (ii) portant des fonctions X1 acides carboxyliques, est choisi dans le groupe comprenant : la 2,2,6,6-tétra-(β-carboxyéthyl)cyclohexanone, le diaminopropane - N,N,N',N' acide tétraacétique, l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, l'acide trimésique, l'acide 1,2,4,5-benzènetétracarboxylique, et l'acide 2,4,6-triaminocaproïque-1,3,5-triazine (TACT).

8. Polyamide selon l'une quelconque des revendications 1 à 7, **caractérisé en ce que** le composé multifonctionnel (ii) portant des fonctions X2 amines est choisi dans le groupe comprenant : les nitrilotrialkylamines, en particulier la nitrilotriéthylamine, les dialkylènetriamines, en particulier la diéthylènetriamine, la bis-hexaméthylène triamine, les trialkylènetétramines et tétraalkylènepentamines, l'alkylène étant de préférence l'éthylène, la 4-aminoéthyle-1,8,octanediamine, la mélamine, les composés provenant de la réaction du triméthylol propane ou du glycérol avec l'oxyde de propylène et amination des groupes hydroxyles terminaux de formule générale : 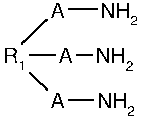 dans laquelle : R₁ représente un radical 1,1,1-triyle propane, ou 1,2,3-triyle propane, et A représente un radical polyoxyéthylénique.

9. Polyamide selon l'une quelconque des revendications 1 à 8, **caractérisé en ce que** le composé monofonctionnel (iii) est un composé hydrocarboné comprenant au moins 2 atomes de carbone, aliphatique, cycloaliphatique ou aromatique et pouvant comprendre des hétéroatomes.

10. Polyamide selon l'une quelconque des revendications 1 à 9, **caractérisé en ce que** le composé monofonctionnel (iii) est choisi dans le groupe comprenant : la n-hexadécylamine, la n-octadécylamine et la n-dodécylamine l'acide acétique, l'acide laurique, la benzylamine, l'acide benzoïque, l'acide propionique et la 4-amino-2,2,6,6-tétraméthylpipéridine.

11. Polyamide selon l'une quelconque des revendications 1 à 10, **caractérisé en ce que** les fonctions X1 du composé multifonctionnel (ii) et la fonction X2 du composé monofonctionnel (iii) sont identiques.

12. Polyamide selon l'une quelconque des revendications 1 à 11, **caractérisé en ce que** l'on utilise de 0,2 à 0,5 % en moles de composés multifonctionnels (ii), par rapport à la somme du nombre de moles de monomères constitutifs du polyamide

13. Polyamide selon l'une quelconque des revendications 1 à 12, **caractérisé en ce que** l'on utilise de 0,5 à 1 % en moles de composés monofonctionnels (iii), par rapport à la somme du nombre de moles de monomères constitutifs du polyamide.

14. Polyamide selon l'une quelconque des revendications 1 à 13, **caractérisé en ce que** l'on utilise une proportion de composés multifonctionnels (ii) et monofonctionnels (iii) obéissant à la relation suivante :
(nCmu . FX1) / nCmo compris entre 0,1 et 4,
avec :
nCmu est le nombre de moles de composés multifonctionnel (ii),
nCmo est le nombre de moles de composés monofonctionnel (iii), et
FX1 est le nombre de fonctions X1 du composé multifonctionnel (ii).

15. Polyamide selon l'une quelconque des revendications 1 à 14, **caractérisé en ce que** la polymérisation est conduite en présence d'un aminoacide ou un lactame.

16. Polyamide selon l'une quelconque des revendications 1 à 15, **caractérisé en ce que** le polyamide modifié présente une viscosité en solution comprise entre 80 et 120, selon la norme ISO 307, avec 0,5 % de polymère dans de l'acide formique à 90 %, à une température de 25°C.

17. Composition comprenant au moins le polyamide selon l'une quelconque des revendications 1 à 16.

18. Composition selon la revendication 17, comprenant en tant que matrice un polyamide selon l'une quelconque des revendications 1 à 16.

19. Composition selon la revendication 17, comprenant un mélange d'un polymère thermoplastique et d'un polyamide selon l'une quelconque des revendications 1 à 16.

20. Composition selon la revendication 19, comprenant un mélange de (co)polyamide et d'un polyamide selon l'une quelconque des revendications 1 à 16.

21. Composition selon l'une quelconque des revendications 17 à 20, comprenant au moins une charge de renfort et/ou de remplissage.

22. Article obtenu par moulage par injection, par injection/soufflage, par extrusion ou par extrusion soufflage d'une composition selon l'une quelconque des revendications 17 à 21.

## Patentansprüche

1. Polyamid, das erhältlich ist durch Polymerisation in Gegenwart von mindestens:
(i) Dicarbonsäure- und Diamin-Monomeren oder Salzen davon;
(ii) 0,05 bis 0,5 Mol-% einer multifunktionellen Verbindung mit mindestens 3 Funktionen X1, bezogen auf die Summe der Zahl der Mole der Aufbaumonomere des Polyamids;
(iii) 0,2 bis 2 Mol-% einer monofunktionellen Verbindung mit einer Funktion X2, bezogen auf die Summe der Zahl der Mole der Aufbaumonomere des Polyamids;
wobei es sich bei den Funktionen X1 und X2 um Carbonsäure- oder Aminfunktionen handelt, die mit den Dicarbonsäure- und Diamin-Monomeren (i) reagieren und eine Amidbindung bilden können;
- dann, wenn die multifunktionelle Verbindung (ii) Funktionen X1 vom Carbonsäure-Typ umfasst, die monofunktionelle Verbindung (iii) eine Funktion X2 vom Carbonsäure-Typ umfasst; und
- dann, wenn die multifunktionelle Verbindung (ii) Funktionen X1 vom Amin-Typ umfasst, die monofunktionelle Verbindung (iii) eine Funktion X2 vom Amin-Typ umfasst.

2. Polyamid nach Anspruch 1, **dadurch gekennzeichnet, dass** die Aufbaumonomere des Polyamids vom Dicarbonsäure-Typ aliphatisch oder aromatisch sind und 4 bis 12 Kohlenstoffatome umfassen.

3. Polyamid nach Anspruch 1 oder 2, **dadurch gekennzeichnet, dass** die Aufbaumonomere des Polyamids vom Diamin-Typ aliphatisch oder aromatisch sind und 4 bis 12 Kohlenstoffatome umfassen.

4. Polyamid nach einem der Ansprüche 1 bis 3, **dadurch gekennzeichnet, dass** es sich bei den Aufbaumonomeren des Polyamids um Adipinsäure und Hexamethylendiamin oder Salze davon handelt.

5. Polyamid nach einem der Ansprüche 1 bis 4, **dadurch gekennzeichnet, dass** die multifunktionelle Verbindung (ii) durch die allgemeine Formel (1) wiedergegeben wird:
R-[A-X1]n (1)
wobei
- R für einen aliphatischen, linearen oder verzweigten, cycloaliphatischen oder aromatischen Kohlenwasserstoffrest, der mindestens 2 Kohlenstoffatome umfasst und ein oder mehrere Heteroatome umfassen kann, steht;
- A für eine kovalente Bindung oder einen aliphatischen Kohlenwasserstoffrest, der ein oder mehrere Heteroatome umfassen kann und 1 bis 20 Kohlenstoffatome umfasst, steht;
- X1 für eine Carbonsäurefunktion oder eine primäre oder sekundäre Aminfunktion oder Salze davon steht; und
- n für eine ganze Zahl zwischen 3 und 10 steht.

6. Polyamid nach einem der Ansprüche 1 bis 5, **dadurch gekennzeichnet, dass** es sich bei der multifunktionellen Verbindung (ii) um eine aliphatische, cycloaliphatische oder aromatische Kohlenwasserstoffverbindung, die mindestens 4 Kohlenstoffatome umfasst und ein oder mehrere Heteroatome umfassen kann, handelt.

7. Polyamid nach einem der Ansprüche 1 bis 6, **dadurch gekennzeichnet, dass** die multifunktionelle Verbindung (ii), die Carbonsäurefunktionen X1 trägt, aus der Gruppe umfassend 2,2,6,6-Tetra(β-carboxyethyl)cyclohexanon, Diaminopropan-N,N,N',N'-tetraessigsäure, 3,5,3',5'-Biphenyltetracarbonsäure, Säuren, die sich von Phthalocyanin und Naphthalocyanin ableiten, 3,5,3',5'-Biphenyltetracarbonsäure, 1,3,5,7-Naphthalintetracarbonsäure, 2,4,6-Pyridintricarbonsäure, 3,5,3',5'-Bipyridyltetracarbonsäure, 3,5,3',5'-Benzophenontetracarbonsäure, 1,3,6,8-Acridintetracarbonsäure, Trimesinsäure, 1,2,4,5-Benzoltetracarbonsäure und 2,4,6-Triaminocapronsäure-1,3,5-triazin (TACT) ausgewählt ist.

8. Polyamid nach einem der Ansprüche 1 bis 7, **dadurch gekennzeichnet, dass** die multifunktionelle Verbindung (ii), die Aminfunktionen X2 trägt, aus der Gruppe umfassend Nitrilotrialkylamine, insbesondere Nitrilotriethylamin, Dialkylentriamine, insbesondere Diethylentriamin, Bishexamethylentriamin, Trialkylentetramine und Tetraalkylenpentamine, wobei es sich bei dem Alkylen vorzugsweise um Ethylen handelt, 4-Aminoethyl-1,8-octandiamin, Melamin und Verbindungen, die aus der Reaktion von Trimethylolpropan oder Glycerin mit Propylenoxid und Aminierung der endständigen Hydroxylgruppen stammen, der folgenden allgemeinen Formel: 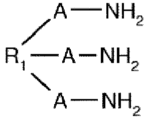 wobei R₁ für einen 1,1,1-Triylpropan- oder 1,2,3-Triylpropanrest steht und A für einen Polyoxyethylenrest steht, ausgewählt ist.

9. Polyamid nach einem der Ansprüche 1 bis 8, **dadurch gekennzeichnet, dass** es sich bei der monofunktionellen Verbindung (iii) um eine aliphatische, cycloaliphatische oder aromatische Kohlenwasserstoffverbindung, die mindestens 2 Kohlenstoffatome umfasst und Heteroatome umfassen kann, handelt.

10. Polyamid nach einem der Ansprüche 1 bis 9, **dadurch gekennzeichnet, dass** die monofunktionelle Verbindung (iii) aus der Gruppe umfassend n-Hexadecylamin, n-Octadecylamin und n-Dodecylamin, Essigsäure, Laurinsäure, Benzylamin, Benzoesäure, Propionsäure und 4-Amino-2,2,6,6-tetramethyl-piperidin ausgewählt ist.

11. Polyamid nach einem der Ansprüche 1 bis 10, **dadurch gekennzeichnet, dass** die Funktionen X1 der multifunktionellen Verbindung (ii) und die Funktion X2 der monofunktionellen Verbindung (iii) identisch sind.

12. Polyamid nach einem der Ansprüche 1 bis 11, **dadurch gekennzeichnet, dass** man 0,2 bis 0,5 Mol-% multifunktionelle Verbindungen (ii), bezogen auf die Summe der Zahl der Mole der Aufbaumonomere des Polyamids, verwendet.

13. Polyamid nach einem der Ansprüche 1 bis 12, **dadurch gekennzeichnet, dass** man 0,5 bis 1 Mol-% monofunktionelle Verbindungen (iii), bezogen auf die Summe der Zahl der Mole der Aufbaumonomere des Polyamids, verwendet.

14. Polyamid nach einem der Ansprüche 1 bis 13, **dadurch gekennzeichnet, dass** man einen Anteil von multifunktionellen Verbindungen (ii) und monofunktionellen Verbindungen (iii) verwendet, der der folgenden Beziehung gehorcht:
(nCmu. FX1)/nCmo zwischen 0,1 und 4,
wobei:
nCmu die Zahl der Mole multifunktioneller Verbindungen (ii) ist,
nCmo die Zahl der Mole monofunktioneller Verbindungen (iii) ist und
FX1 die Zahl der Funktionen X1 der multifunktionellen Verbindung (ii) ist.

15. Polyamid nach einem der Ansprüche 1 bis 14, **dadurch gekennzeichnet, dass** die Polymerisation in Gegenwart einer Aminosäure oder eines Lactams durchgeführt wird.

16. Polyamid nach einem der Ansprüche 1 bis 15, **dadurch gekennzeichnet, dass** das modifizierte Polyamid eine Lösungsviskosität zwischen 80 und 120 gemäß ISO-Norm 307 mit 0,5% Polymer in 90%iger Ameisensäure bei einer Temperatur von 25°C aufweist.

17. Zusammensetzung, die mindestens das Polyamid nach einem der Ansprüche 1 bis 16 umfasst.

18. Zusammensetzung nach Anspruch 17, die als Matrix ein Polyamid nach einem der Ansprüche 1 bis 16 umfasst.

19. Zusammensetzung nach Anspruch 17, die eine Mischung aus einem thermoplastischen Polymer und einem Polyamid nach einem der Ansprüche 1 bis 16 umfasst.

20. Zusammensetzung nach Anspruch 19, die eine Mischung aus (Co)polyamid und einem Polyamid nach einem der Ansprüche 1 bis 16 umfasst.

21. Zusammensetzung nach einem der Ansprüche 17 bis 20, die mindestens einen verstärkenden und/oder streckenden Füllstoff umfasst.

22. Gegenstand, erhalten durch Spritzguss, Spritzblasformen, Extrusion oder Extrusionsblasformen einer Zusammensetzung nach einem der Ansprüche 17 bis 21.

## Claims

1. Polyamide which can be obtained by polymerization in the presence of at least:
(i) dicarboxylic acid and diamine monomers, or salts thereof;
(ii) from 0.05 to 0.5 mol% of a multifunctional compound comprising at least three functions X1, relative to the sum of the number of moles of constituent monomers of the polyamide;
(iii) from 0.2 to 2 mol% of a monofunctional compound comprising a function X2, relative to the sum of the number of moles of constituent monomers of the polyamide;
the functions X1 and X2 being carboxylic acid functions or amine functions, capable of reacting with the dicarboxylic acid and diamine monomers (i) and of forming an amide bond;
- when the multifunctional compound (ii) comprises functions X1 of carboxylic acid type, the monofunctional compound (iii) comprises a function X2 of carboxylic acid type; and
- when the multifunctional compound (ii) comprises functions X1 of amine type, the monofunctional compound (iii) comprises a function X1 of amine type.

2. Polyamide according to Claim 1, **characterized in that** the constituent monomers of the polyamide of dicarboxylic acid type are aliphatic or aromatic and comprise from 4 to 12 carbon atoms.

3. Polyamide according to Claim 1 or 2, **characterized in that** the constituent monomers of the polyamide of diamine type are aliphatic or aromatic and comprise from 4 to 12 carbon atoms.

4. Polyamide according to any one of Claims 1 to 3, **characterized in that** the constituent monomers of the polyamide are adipic acid and hexamethylenediamine, or salts thereof.

5. Polyamide according to any one of Claims 1 to 4, **characterized in that** the multifunctional compound (ii) is represented by general formula (1):
R-[A-X1]n (1)
in which
- R is a linear or branched aliphatic, cycloaliphatic or aromatic hydrocarbon-based radical comprising at least 2 carbon atoms and possibly comprising one or more heteroatoms;
- A is a covalent bond or an aliphatic hydrocarbon-based radical possibly comprising one or more heteroatoms, and comprising from 1 to 20 carbon atoms;
- X1 is a carboxylic acid function or a primary or secondary amine function, or salts thereof; and
- n is an integer between 3 and 10.

6. Polyamide according to any one of Claims 1 to 5, **characterized in that** the multifunctional compound (ii) is an aliphatic, cycloaliphatic or aromatic hydrocarbon-based compound comprising at least 4 carbon atoms and possibly comprising one or more heteroatoms.

7. Polyamide according to any one of Claims 1 to 6, **characterized in that** the multifunctional compound (ii) bearing carboxylic acid functions X1 is chosen from the group comprising: 2,2,6,6-tetra-(β-carboxyethyl)cyclohexanone, diaminopropane -N,N,N',N'-tetraacetic acid, 3,5,3',5'-biphenyltetracarboxylic acid, acids derived from phthalocyanin and from naphthalocyanin, 3,5,3',5'-biphenyltetracarboxylic acid, 1,3,5,7-naphthalenetetracarboxylic acid, 2,4,6-pyridinetricarboxylic acid, 3,5,3',5'-bipyridyltetracarboxylic acid, 3,5,3',5'-benzophenonetetracarboxylic acid, 1,3,6,8-acridinetetracarboxylic acid, trimesic acid, 1,2,4,5-benzenetetracarboxylic acid, and 2,4,6-tri(aminocaproic acid)-1,3,5-triazine (TACT).

8. Polyamide according to any one of Claims 1 to 7, **characterized in that** the multifunctional compound (ii) bearing amine functions X2 is chosen from the group comprising: nitrilotrialkylamines, in particular nitrilotriethylamine, dialkylenetriamines, in particular diethylenetriamine, bis-hexamethylene triamine, trialkylenetetraamines and tetraalkylenepentamines, the alkylene preferably being ethylene, 4-aminoethyl-1,8-octanediamine, melamine, compounds originating from the reaction of trimethylolpropane or of glycerol with propylene oxide and amination of the end hydroxyl groups of general formula: 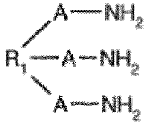 in which: R₁ represents a 1,1,1-triylepropane or 1,2,3-triylepropane radical, and A represents a polyoxyethylene radical.

9. Polyamide according to any one of Claims 1 to 8, **characterized in that** the monofunctional compound (iii) is an aliphatic, cycloaliphatic or aromatic hydrocarbon-based compound comprising at least 2 carbon atoms and possibly comprising heteroatoms.

10. Polyamide according to any one of Claims 1 to 9, **characterized in that** the monofunctional compound (iii) is chosen from the group comprising: n-hexadecylamine, n-octadecylamine and n-dodecylamine, acetic acid, lauric acid, benzylamine, benzoic acid, propionic acid and 4-amino-2,2,6,6-tetramethylpiperidine.

11. Polyamide according to any one of Claims 1 to 10, **characterized in that** the functions X1 of the multifunctional compound (ii) and the function X2 of the monofunctional compound (iii) are identical.

12. Polyamide according to any one of Claims 1 to 11, **characterized in that** use is made of from 0.2 to 0.5 mol% of multifunctional compounds (ii), relative to the sum of the number of moles of constituent monomers of the polyamide.

13. Polyamide according to any one of Claims 1 to 12, **characterized in that** use is made of from 0.5 to 1 mol% of monofunctional compounds (iii), relative to the sum of the number of moles of constituent monomers of the polyamide.

14. Polyamide according to any one of Claims 1 to 13, **characterized in that** use is made of a proportion of multifunctional compounds (ii) and monofunctional compounds (iii) obeying the following relationship:
(nCmu x FX1)/nCmo between 0.1 and 4,
with:
nCmu is the number of moles of multifunctional compounds (ii),
nCmo is the number of moles of monofunctional compounds (iii), and
FX1 is the number of functions X1 of the multifunctional compound (ii).

15. Polyamide according to any one of Claims 1 to 14, **characterized in that** the polymerization is carried out in the presence of an amino acid or a lactam.

16. Polyamide according to any one of Claims 1 to 15, **characterized in that** the modified polyamide has a viscosity in solution of between 80 and 120, according to standard ISO 307, with 0.5% of polymer in formic acid at 90%, at a temperature of 25°C.

17. Composition comprising at least the polyamide according to any one of Claims 1 to 16.

18. Composition according to Claim 17, comprising, as matrix, a polyamide according to any one of Claims 1 to 16.

19. Composition according to Claim 17, comprising a mixture of a thermoplastic polymer and of a polyamide according to any one of Claims 1 to 16.

20. Composition according to Claim 19, comprising a mixture of (co)polyamide and of a polyamide according to any one of Claims 1 to 16.

21. Composition according to any one of Claims 17 to 20, comprising at least one reinforcing and/or bulking filler.

22. Article obtained by injection-moulding, by injection/blow-moulding, by extrusion or by extrusion-blow moulding of a composition according to any one of Claims 17 to 21.
